# EUROPÄISCHE PATENTSCHRIFT

(11) **EP 3 714 589 B1**
(45) Veröffentlichungstag und Bekanntmachung des Hinweises auf die Patenterteilung: **26.04.2023**
(21) Anmeldenummer: 18804615.5
(22) Anmeldetag: 19.11.2018
(51) Int. Cl.: H04L 9/40, G06F 21/81, H04L 67/025, H04L 67/12, F03D 7/04

(54) **VERFAHREN, VORRICHTUNG UND SYSTEM FÜR DEN DATENAUSTAUSCH MIT EINER WINDENERGIEANLAGE ODER EINEM WINDPARK**
METHOD, APPARATUS AND SYSTEM FOR DATA EXCHANGE WITH A WIND TURBINE OR A WIND FARM
PROCÉDÉ, DISPOSITIF ET SYSTÈME D'ÉCHANGE DE DONNÉES AVEC UNE INSTALLTION ÉOLIENNE OU UN PARC ÉOLIEN

(30) Priorität: 21.11.2017 DE 102017127389
(43) Veröffentlichungstag der Anmeldung: 30.09.2020
(73) Patentinhaber: Wobben Properties GmbH, 26607 Aurich (DE)
(72) Erfinder: GERTJEGERDES, Stefan, 26603 Aurich (DE); BUSKER, Kai, 26629 Großefehn (DE)
(74) Vertreter: Eisenführ Speiser
(86) Internationale Anmeldenummer: PCT/EP2018/081708
(87) Internationale Veröffentlichungsnummer: WO 2019/101673

(56) Entgegenhaltungen:
- EP-A1- 1 519 040
- US-A1- 2012 096 537
- US-A1- 2014 165 182

## Beschreibung

Die Erfindung betrifft den Bereich der Windenergieanlagen und Windparks, wobei die Erfindung sich besonders mit der Kommunikation zwischen einer Windenergieanlage oder einem Windpark und einem entfernten Computer befasst.

Aus dem Stand der Technik ist es bekannt, dass ein Fernzugriff auf Windparks zur Statusabfrage oder Konfiguration einer oder mehrerer Windenergieanlagen oder eines Windparkreglers möglich ist. Ein Fernzugriff ist bislang jedoch nur in beschränktem Umfang möglich, um Sicherheitsanforderungen zu genügen. So ist beispielsweise eine Datenübertragungsrate, mit der auf einen Windpark zugegriffen werden kann, stark begrenzt und es ist hierfür in der Regel ein herstellerspezifisches Datenprotokoll zu verwenden.

Demnach weist ein Windpark beispielsweise einen Zugangsrechner auf, der mit dem Internet verbunden ist und auf den über das Internet von einem entfernten Computer zugegriffen werden kann. Der Zugangsrechner selbst ist jedoch mit Komponenten des Windparks oder der Windenergieanlage, auf die zugegriffen werden soll, über ein sehr langsames herstellerspezifisches Datenprotokoll verbunden, um bei einem Fernzugriff erst gar nicht die Möglichkeit zu bieten, in kurzer Zeit eine umfangreiche Abfrage oder Umprogrammierung der Windenergieanlage oder des Windparks durchzuführen. Auch können mögliche Funktionen durch einen Fernzugriff beschränkt sein, sodass nur einzelne Steuerbefehle oder Abfragen über eine derartig langsame Datenverbindung möglich.

Eine komplette Rekonfiguration oder Abfrage von Statusinformationen, zum Beispiel kompletter umfangreicher Aufzeichnungen der Betriebshistorie, ist demnach bislang nur von Personal ausführbar, das sich vor Ort der Windenergieanlage oder des Windparks direkt mit der Komponente verbindet.

Zunehmend wird jedoch der Wunsch größer, auf eine Windenergieanlage oder einen Windpark und insbesondere auf eine Komponente der Windenergieanlage oder des Windparks aus der Ferne in einem möglichst großen Umfang zugreifen zu können. Demnach ist es beispielsweise wünschenswert, große Datenmengen mit der Komponente einer Windenergieanlage oder eines Windparks von einem entfernten Computer möglichst zeitnah auszutauschen. Idealerweise wäre demnach eine Ethernetverbindung, die teilweise über das Internet geführt würde, zwischen der Komponente und dem entfernten Computer wünschenswert, um bei einem Fernzugriff die gleichen Möglichkeiten der Einwirkung auf das Steuersystem zu haben, wie sie ein Servicemitarbeiter, der vor Ort ist, hat.

Aus Sicherheitsgründen wurde jedoch von derartigen Verbindungen bislang abgesehen, da diese anfällig für Angriffe und Manipulationen sind, wodurch die Gefahr besteht, dass ein Angreifer möglicherweise innerhalb kürzester Zeit Zugriff auf einen oder mehrere Windparks erhalten könnte. Da die Windenergie heute einen großen Anteil an der Bereitstellung der Energie im Versorgungsnetz leistet, besteht die Gefahr, dass bei Wegfall eines Anteils der Windenergie in einer Region das komplette Versorgungsnetz zusammenbricht. Es wäre also möglich, dass ein Angreifer mehrere Windparks innerhalb kurzer Zeit so manipuliert, dass hierdurch ein komplettes Versorgungsnetz zusammenbrechen könnte.

EP 1 519 040 A1 zeigt einen Fernzugriff auf einen Windpark, bei dem eine Datenkommunikation durch eine Firewall geschützt ist. US 2012/0096537 A1 offenbart ferner eine interne Computerhardware, um einen Computer vor Angriffen auf den Computer aus dem Internet zu schützen. Ferner zeigt US 2014/0165182 A1 Maßnahmen für einen sicheren Datentransfer.

Trotz umfangreicher Verschlüsselungsalgorithmen bei der Datenverbindung, ist eine Internetverbindung mit einer Windenergieanlage oder einem Windpark Angriffen von außerhalb ausgesetzt und bietet daher nur eine begrenzte Sicherheit gegenüber Angreifern.

In der prioritätsbegründenden deutschen Patentanmeldung hat das Deutsche Patent- und Markenamt die folgenden Dokumente recherchiert: DE 10 2009 060 417 A1 und DE 20 2014 106 258 U1.

Somit ist es Aufgabe der vorliegenden Erfindung, eine schnelle Datenverbindung zu einer Steuerkomponente einer Windenergieanlage oder eines Windparks bereitzustellen, um durch einen Fernzugriff Daten mit einer vergleichsweise höheren Datenübertragungsrate mit der Windenergieanlage oder dem Windpark auszutauschen. Diese Verbindung soll weiterhin sicher gegenüber Angreifern sein.

Hierzu betrifft die Erfindung eine Sicherheitsvorrichtung zum Datenaustausch einer Komponente einer Windenergieanlage oder eines Windparks mit einem entfernten Computer. Der Begriff "entfernter Computer" beschreibt einen Computer oder Rechner, der selbst nicht Bestandteil der Windenergieanlage oder des Windparks ist, wobei unter dem Begriff "entfernt" nicht zu verstehen ist, dass ein Mindestabstand zwischen der Windenergieanlage oder dem Windpark und dem Computer eingehalten sein muss. So kann der entfernte Computer auch unmittelbar neben der Windenergieanlage oder dem Windpark angeordnet sein oder auch in mehreren Kilometern oder mehreren hundert oder mehreren tausend Kilometern Entfernung stehen. "Entfernter Computer" bedeutet demnach jedenfalls, dass der Computer nicht selbst Bestandteil der Windenergieanlage oder des Windparks ist und somit keinen unmittelbaren Zugriff auf Komponenten der Windenergieanlage oder des Windparks hat.

Der Begriff "Komponente" betrifft demgegenüber eine Komponente, die Bestandteil einer Windenergieanlage oder eines Windparks, insbesondere eines Windparkreglers, und beispielsweise eine Steuerungskomponente ist. Unter "Komponente" fällt demnach eine Datenverarbeitungseinrichtung der Windenergieanlage oder des Windparkreglers, die beispielsweise zur Steuerung der Windenergieanlage oder mehrerer Windenergieanlagen einerseits, aber auch beispielsweise lediglich zur Speicherung von Betriebsdaten der Windenergieanlage oder Windenergieanlagen eingerichtet ist.

Die Sicherheitsvorrichtung weist eine erste Datenschnittstelle auf, die zum Verbinden der Sicherheitsvorrichtung mit der Komponente über eine erste Datenverbindung eingerichtet ist. Außerdem umfasst die Sicherheitsvorrichtung eine zweite Datenschnittstelle, die eingerichtet ist, um den entfernten Computer über eine zweite Datenverbindung mit der Sicherheitsvorrichtung zu verbinden. Weiter umfasst die Sicherheitsvorrichtung eine dritte Datenschnittstelle, mit der ein Schaltsignal über eine dritte Datenverbindung empfangbar ist. Außerdem ist innerhalb der Sicherheitsvorrichtung eine trennbare interne Datenverbindung zwischen der ersten Datenschnittstelle und der zweiten Datenschnittstelle vorgesehen. Die trennbare interne Datenverbindung ist somit eingerichtet, die erste Datenverbindung und die zweite Datenverbindung zu verbinden oder diese Verbindung zu unterbrechen.

Außerdem umfasst die Sicherheitsvorrichtung eine Schalteinheit, die eingerichtet ist, in Abhängigkeit des Schaltsignals eine physikalische Verbindung der oder innerhalb der internen Datenverbindung zu trennen und/oder herzustellen.

Demnach ist also eine Datenverbindung zwischen der Komponente der Windenergieanlage oder des Windparks mit einem entfernten Computer zumindest abschnittsweise über die erste Datenverbindung und die zweite Datenverbindung sowie die trennbare interne Datenverbindung der Sicherheitsvorrichtung möglich. Die trennbare interne Datenverbindung weist jedoch eine physikalische Verbindung auf, die trennbar ist Beispiele für das Trennen einer physikalischen Verbindung ist eine elektrische Trennung der Verbindung.

Demnach werden elektrische Signale, die der Datenübertragung dienen, nach der Trennung nicht weitergeleitet. Eine Trennung der physikalischen Verbindung ist demnach nicht auf den Fall beschränkt, dass eine mechanische Unterbrechung der internen Datenverbindung erfolgt, wobei auch dieser Fall eingeschlossen ist. Vielmehr bedeutet das Trennen einer physikalischen Verbindung, dass die Datensignale zwischen der ersten und zweiten Datenschnittstelle nicht mehr ausgetauscht werden.

Ist eine physikalische Trennung der Datenverbindung erfolgt, so kann über diese Datenverbindung ein Wiederherstellen der Datenverbindung nicht erfolgen, da der entfernte Computer keine Möglichkeit mehr hat, auf die Komponenten der Windenergieanlagen zuzugreifen. Demnach sind die Komponenten der Windenergieanlage oder des Windparks durch eine physikalische Trennung der Datenverbindung zu einem entfernten Computer vor Angriffen vom entfernten Computer, der beispielsweise keine Berechtigung hat, geschützt.

Soll ein Zugriff auf eine Komponente einer Windenergieanlage oder eines Windparks aus der Ferne durch einen entfernten Computer erfolgen, so ist es zuerst nötig, ein Schaltsignal für die Sicherheitsvorrichtung zu erzeugen, um die physikalische Verbindung der internen Datenverbindung herzustellen. Erst nach dem Herstellen der physikalischen Verbindung ist dann ein Zugriff durch den entfernten Computer auf die Komponente möglich.

Gemäß einer ersten Ausführungsform weist die Sicherheitsvorrichtung eine Kopplungseinheit, insbesondere einen Switch, einen Repeater, einen Router oder ein Modem, auf. Die Kopplungseinheit umfasst die erste Datenschnittstelle und die zweite Datenschnittstelle und benötigt eine Spannungsversorgung zum Bereitstellen der internen Datenverbindung, also zum Herstellen der physikalischen Verbindung der internen Datenverbindung. Die Spannungsversorgung ist hierbei mit der Schalteinheit an- und/oder abschaltbar. Somit ist die physikalische Verbindung der internen Datenverbindung auf einfache Art und Weise trennbar oder herstellbar.

Gemäß einer weiteren Ausführungsform ist die Sicherheitsvorrichtung eingerichtet, die physikalische Verbindung, im Falle, dass diese hergestellt ist, nach einer vorbestimmten Dauer, beispielsweise nach einer Dauer im Bereich von 30 Sekunden bis 12 Stunden, oder bevorzugt im Bereich von einer Minute bis zu einer Stunde, zum Beispiel nach 30 Minuten, automatisch zu trennen. Außerdem ist die Sicherheitsvorrichtung zusätzlich oder alternativ eingerichtet, die physikalische Verbindung, im Falle, dass diese hergestellt ist, nach Inaktivität einer Datenübertragung über einen vordefinierten Zeitraum automatisch zu trennen.

Wird es also versäumt oder wird aufgrund eines Übertragungsfehlers kein Schaltsignal erzeugt, das die physikalische Verbindung der internen Datenverbindung nach dem Zugriff trennt, erfolgt die Trennung der physikalischen Verbindung automatisch, um somit die Sicherheitsanforderungen zu erhöhen.

Außerdem betrifft die Erfindung ein System, das eine Sicherheitsvorrichtung nach einer der vorgenannten Ausführungsformen umfasst. Außerdem umfasst das System einen Zugangsrechner, der eine vierte Datenschnittstelle aufweist, um über eine vierte Datenverbindung mit dem entfernten Computer Daten auszutauschen. Außerdem ist der Zugangsrechner eingerichtet, in Abhängigkeit der ausgetauschten Daten zwischen dem entfernten Computer und dem Zugangsrechner, also insbesondere über Daten, die über die vierte Datenschnittstelle erhalten werden, das Schaltsignal, insbesondere direkt oder indirekt, zu erzeugen.

Der Zugangsrechner ist beispielsweise ein SCADA-Rechner einer Windenergieanlage oder eines Windparks, auf den über eine Internetverbindung zugegriffen werden kann. Dieser Computer stellt somit eine erste Sicherheitsinstanz dar, die zunächst überwunden werden muss, um die Datenverbindung zwischen der Komponente und dem entfernten Computer über die interne Datenverbindung der Sicherheitsvorrichtung herzustellen, wenn ein Angreifer einen Angriff und somit einen Zugriff auf die Komponente der Windenergieanlage ausüben möchte.

Gemäß einer weiteren Ausführungsform ist der Zugangsrechner eingerichtet, das Schaltsignal direkt zu erzeugen und über die dritte Datenverbindung an die dritte Datenschnittstelle zu übertragen. Alternativ ist der Zugangsrechnung mit der Komponente der Windenergieanlage oder des Windparks über eine fünfte Datenverbindung verbindbar und eingerichtet, das Schaltsignal indirekt zu erzeugen. Hierzu ist der Zugangsrechner eingerichtet, die Komponente über die fünfte Datenverbindung zu veranlassen, das Schaltsignal zu erzeugen und über eine dritte Datenverbindung, die dann zwischen der Komponente und der Sicherheitsvorrichtung realisiert ist, an die dritte Datenschnittstelle der Sicherheitsvorrichtung zu übertragen.

Sind vordefinierte besondere Anforderungen an den Zugangsrechner vom Zugangsrechner erfüllt, so ist es möglich, das Schaltsignal direkt vom Zugangsrechner zu erzeugen. Stellt der Zugangsrechner jedoch ebenfalls noch eine für einen Angreifer überwindbare Sicherheitseinrichtung gemäß vordefinierter Sicherheitsanforderungen dar, so ist es alternativ vorgesehen, eine Datenverbindung zwischen dem Zugangsrechner und der Komponente selbst herzustellen, um dann das Schaltsignal von der Komponente selbst zu erzeugen. Hierbei stellt die Komponente und/oder die fünfte Datenverbindung eine weitere Sicherheitsinstanz für einen Angreifer dar.

Vorzugsweise weist die trennbare interne Datenverbindung eine Datenübertragungsrate auf, die mehr als ein Mehrfaches der Datenübertragungsrate der dritten und/oder fünften Datenverbindung entspricht. Im Vergleich zur Datenverbindung zwischen der Komponente und dem entfernten Computer ist demnach die Datenverbindung zum Erzeugen des Schaltsignals sehr langsam, sodass es diese geringe Übertragungsrate einem Angreifer erschwert, das Schaltsignal über den Zugangsrechner zu erzeugen.

Gemäß einer weiteren Ausführungsform ist die dritte und/oder fünfte Datenverbindung eine serielle Datenverbindung und/oder eine Busverbindung, insbesondere eine Feldbusverbindung. Besonders bevorzugt erfolgt die Übertragung über die dritte und/oder fünfte Datenverbindung mit einem proprietären Protokoll. Selbst wenn somit ein Angreifer einen Zugang zum Zugangsrechner erhält, ist es somit aufgrund der langsamen Übertragungsrate der dritten und/oder fünften Datenverbindung und beispielsweise eines vom Hersteller definierten Protokoll ohne Kenntnis über das Protokoll nur auf sehr aufwändige Weise möglich, das Schaltsignal zu erzeugen.

Gemäß einer weiteren Ausführungsform ist die erste, zweite und/oder vierte Datenverbindung eine Ethernetverbindung. Ist also demnach eine physikalische Verbindung der internen Datenverbindung hergestellt, so lassen sich sehr schnell Daten zwischen der Komponente der Windenergieanlage oder des Windparks und dem entfernten Computer austauschen.

Gemäß einer weiteren Ausführungsform weist das System einen Zugangspunkt auf, der insbesondere ein Router oder VPN-Router ist. Der Zugangspunkt dient, um die Verbindung zum entfernten Computer teilweise über die zweite und/oder vierte Datenverbindung und zumindest abschnittsweise über eine Internetverbindung oder eine Netzwerkverbindung zu führen. Gemäß einer weiteren Ausführungsform ist eine, sind mehrere oder alle Datenverbindungen eingerichtet, verschlüsselte Daten zu übertragen.

Gemäß einer weiteren Ausführungsform ist die Komponente eine Komponente oder Bestandteil eines Windparkreglers oder eine Komponente oder Bestandteil einer Windenergieanlage. Außerdem umfasst das System gemäß einer weiteren Ausführungsform mehrere Windenergieanlagen und/oder einen Windparkregler.

Gemäß einer weiteren Ausführungsform ist die Komponente Bestandteil des Systems und eingerichtet, vorbestimmte Zugriffe durch einen entfernten Computer bei hergestellter physikalischer Verbindung der Sicherheitsvorrichtung zu erkennen und in Abhängigkeit der erkannten Zugriffe die physikalische Verbindung zu trennen.

Es können demnach vorbestimmte Zugriffe, die zum Beispiel ungewöhnliche Zugriffe oder auch gefährliche Zugriffe umfassen, wie beispielsweise ein plötzliches Abschalten oder Trennen aller Anlagen eines Windparks vom Netz, zu erkennen und dadurch einen Angriff zu registrieren. In Abhängigkeit eines derartig erkannten Zugriffs wird dann die physikalische Verbindung getrennt und insbesondere der Zugriff nicht ausgeführt.

Außerdem betrifft die Erfindung ein Verfahren zum Datenaustausch, also zum Kommunizieren mit einer Komponente einer Windenergieanlage und/oder einem Windpark. Die Kommunikation erfolgt mit einer Sicherheitsvorrichtung nach einer der vorgenannten Ausführungsformen und/oder einem System nach einer der vorgenannten Ausführungsformen.

Gemäß einer Ausführungsform des Verfahrens wird ein Schaltsignal erzeugt, um mit der Sicherheitsvorrichtung eine physikalische Verbindung einer trennbaren internen Datenverbindung zwischen einer ersten Datenschnittstelle, mit der die Komponente über eine erste Datenverbindung verbunden ist, und einer zweiten Datenschnittstelle, mit der ein entfernter Computer über eine zweite Datenverbindung verbunden ist, herzustellen und/oder zu trennen.

Gemäß einer weiteren Ausführungsform des Verfahrens wird nach einer vorbestimmten Dauer, zum Beispiel nach einer Dauer im Bereich von 30 Sekunden bis 12 Stunden, besonders bevorzugt im Bereich von einer Minute bis zu einer Stunde, zum Beispiel 30 Minuten, oder nach Inaktivität für eine vordefinierte Zeitdauer der Datenübertragung, die physikalische Verbindung automatisch getrennt.

Weitere Ausführungsformen ergeben sich anhand der in den Figuren näher erläuterten Ausführungsbeispiele. Hierbei zeigen:
- Fig. 1: eine Windenergieanlage,
- Fig. 2: eine Anbindung eines Windparks an einen entfernten Computer,
- Fig. 3: das System mit der Sicherheitsvorrichtung gemäß einem Ausführungsbeispiel und
- Fig. 4: ein Ausführungsbeispiel eines Ablaufs des Verfahrens.

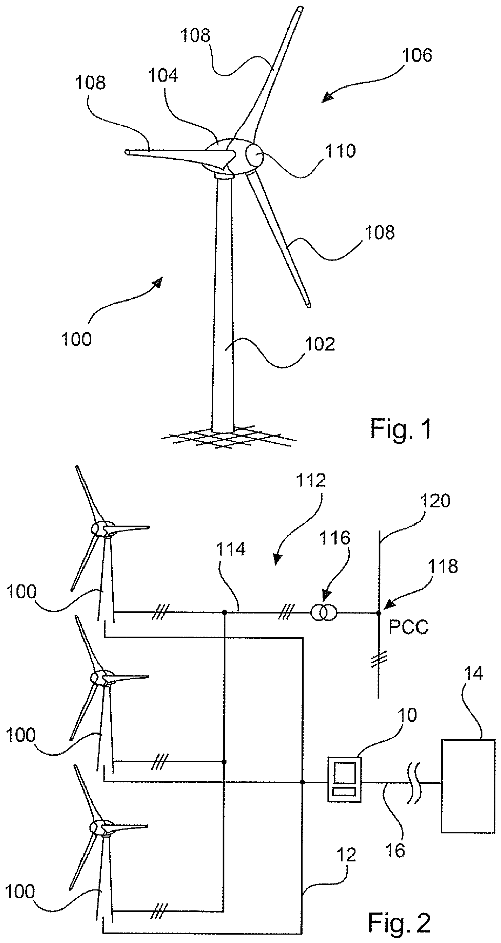

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

Fig. 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom, über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

Weiter zeigt Fig. 2 einen Windparkregler 10, der mit jeder der Windenergieanlagen 100 zum Datenaustausch über eine Datenleitung 12 verbunden ist. Der Windparkregler 10 und die Windenergieanlagen 100 können über die Datenleitung 12 Daten miteinander austauschen, sodass beispielsweise Statusdaten der Windenergieanlagen 100 dem Windparkregler 10 zur Auswertung zugeführt werden und/oder der Windparkregler 10 über die Datenverbindung 12 die Windenergieanlagen 100 regeln oder steuern kann.

Außerdem ist ein entfernter Computer 14 vorgesehen, der über eine weitere Datenverbindung 16 mit dem Windparkregler 10 verbunden ist. Vom entfernten Computer 14, der beispielsweise eine Leitzentrale des Windparkbetreibers oder des Windparkherstellers ist, lassen sich Statusinformationen vom Windparkregler 10 abrufen oder über den Windparkregler 10 die Windenergieanlagen 100 steuern, konfigurieren oder dergleichen.

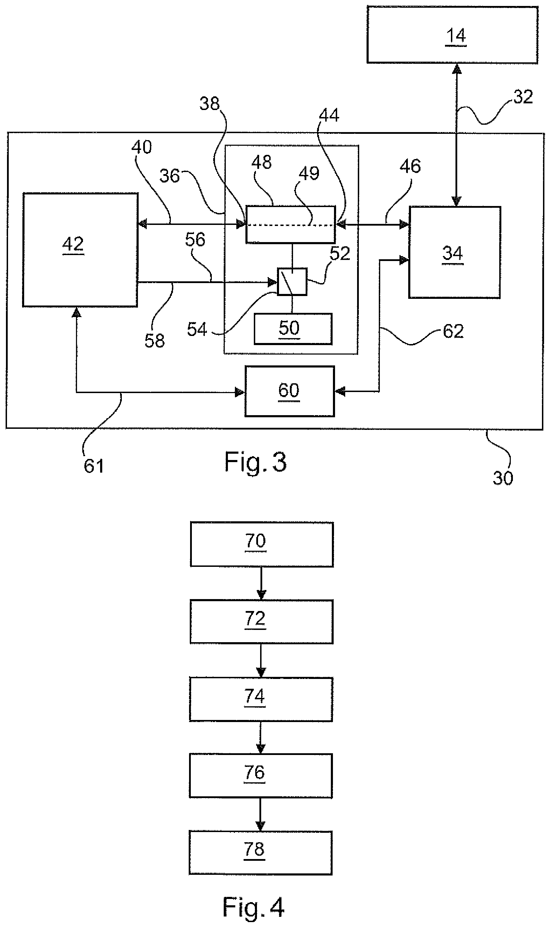

Der Windparkregler 10 umfasst dabei ein Ausführungsbeispiel des erfindungsgemäßen Systems, das unter Bezug auf Fig. 3 im Folgenden beschrieben wird.

Demnach zeigt Fig. 3 ein Ausführungsbeispiel eines Systems 30, das beispielsweise in einem Windparkregler 10 oder einer Windenergieanlage 100 angeordnet ist. Das System 30 ist über eine Internetverbindung 32 mit einem entfernten Computer 14 verbunden, der beispielsweise beim Windenergieanlagenhersteller selbst, dem Betreiber der Windenergieanlage oder Windenergieanlagen, oder einem Netzbetreiber örtlich angeordnet ist.

Das System 30 weist einen Zugangspunkt 34 auf, mit dem die Internetverbindung 32 herstellbar ist. Der Zugangspunkt 34 ist beispielsweise ein VPN-Router. Außerdem umfasst das System 30 eine Sicherheitsvorrichtung 36, die eine erste Schnittstelle 38 aufweist. Über die erste Schnittstelle 38 eine erste Datenverbindung 40 mit einer Komponente 42 des Windparkreglers 10, die beispielsweise eine Steuerungskomponente 42 des Windparkreglers 10 ist, hergestellt. Außerdem umfasst die Sicherheitsvorrichtung 36 eine zweite Datenschnittstelle 44, mit der die Sicherheitsvorrichtung 36 mit dem Zugangspunkt 34 über eine zweite Datenverbindung 46 verbunden ist.

Die erste Datenschnittstelle 38 und die zweite Datenschnittstelle 44 sind Bestandteil einer Kopplungseinheit 48 der Sicherheitsvorrichtung 36. Die Kopplungseinheit 48 stellt eine interne Datenverbindung 49 zwischen der ersten Datenschnittstelle 38 und zweiten Datenschnittstelle 44 her, wobei zum Herstellen dieser internen Datenverbindung 49 die Kopplungseinheit 48, die beispielsweise ein Ethernet-Switch ist, mit einer Spannungsversorgung 50 versorgt werden muss. Wird die Spannungsversorgung 50 von der Kopplungseinheit 48 getrennt, so entsteht die Trennung einer physikalischen Verbindung der internen Datenverbindung 49.

Außerdem ist eine Schalteinheit 52 vorgesehen, die die Spannungsversorgung 50 für die Kopplungseinheit 48 von der Kopplungseinheit 48 trennen kann, sodass die interne Datenverbindung 49 innerhalb der Kopplungseinheit 48 hergestellt oder getrennt wird. Die Schalteinheit 52 der Sicherheitsvorrichtung 36 der weist hierzu eine dritte Datenschnittstelle 54 auf, über die ein Schaltsignal 56 empfangbar ist. Das Schaltsignal 56 ist von der Komponente 42 erzeugbar und über eine dritte Datenverbindung 58 der dritten Datenschnittstelle 54 zuführbar.

Das Schaltsignal 56 wird hierbei erzeugt, indem über den Zugangspunkt 34 eine Verbindung zwischen dem entfernten Computer 14 und einem Zugangsrechner 60 hergestellt wird. Hierzu ist der Zugangsrechner 60 über eine vierte Datenverbindung 62 mit dem Zugangspunkt 34 verbunden. Über die Internetverbindung 32 zum Zugangspunkt 34 und die vierte Datenverbindung 62 zum Zugangsrechner 60 lässt sich eine Nachricht erzeugen, die vom Zugangsrechner 60 unter Verwendung eines proprietären Protokolls über eine fünfte Datenverbindung 61 der Komponente 42 zugeführt wird. Diese Nachricht veranlasst dann die Komponente 42 ein Schaltsignal 56 zu erzeugen, das über die dritte Datenverbindung 58 der Schalteinheit 52 der Sicherheitsvorrichtung 36 zugeführt wird, um eine Spannungsversorgung 50 für die Kopplungseinheit 48 bereitzustellen, um somit eine Datenverbindung zwischen der Komponente 42 und dem entfernten Computer 14 über die erste Datenverbindung 40, die interne Datenverbindung 49 der Kopplungseinheit 48, die zweite Datenverbindung 46 sowie die Internetverbindung 32 herzustellen.

Nach Ablauf einer vorbestimmten Zeitdauer, vorzugsweise 30 Minuten, unterbricht die Schalteinheit 52 wieder die Spannungsversorgung 50 der Kopplungseinheit 48, sodass die Datenverbindung zwischen der Komponente 42 und dem entfernten Computer 14 unterbrochen wird. Die Datenverbindung zwischen dem Zugangsrechner 60, der beispielsweise ein SCADA-System ist, und der Komponente 42 ist eine vergleichsweise langsame Datenverbindung, beispielsweise eine Busverbindung mit einem proprietären Protokoll, die eine Datenübertragungsrate aufweist, die jedenfalls um ein Vielfaches geringer als die Datenübertragungsrate der Verbindung über die Kopplungseinheit 48 zwischen der Komponente 42 und dem entfernten Computer 14 ist.

Fig. 4 zeigt ein Ausführungsbeispiel eines Verfahrens, bei dem auf die Komponente 42 einer Windenergieanlage 100 oder eines Windparks 112 durch einen entfernten Computer 14 zugegriffen wird. Im Schritt 70 wird eine Verbindung zwischen einem entfernten Computer 14 und einem Zugangsrechner 60 des Windparks 112 hergestellt. Im Schritt 72 wird dann vom Zugangsrechner 60 eine Nachricht erzeugt und an die Komponente 42 übertragen. Im darauffolgenden Schritt 74 wird dann in der Komponente 42 ein Schaltsignal 56 erzeugt und an eine Schalteinheit 52 einer Sicherheitsvorrichtung 36 übertragen. Im Schritt 76 wird dann eine physikalische Verbindung einer internen Datenverbindung 49 in einer Kopplungseinheit 48 der Sicherheitsvorrichtung 36 zwischen einer ersten Datenschnittstelle 38 und einer zweiten Datenschnittstelle 44 hergestellt. Im Schritt 78 erfolgt dann ein Zugriff vom entfernten Computer 14 über die Kopplungseinheit 48 der Sicherheitsvorrichtung 36 mit der Komponente 42.

## Patentansprüche

1. Sicherheitsvorrichtung zum Datenaustausch einer Komponente (42) einer Windenergieanlage (100) oder eines Windparks (112), insbesondere eines Windparkreglers (10), mit einem entfernten Computer (14), wobei die Sicherheitsvorrichtung (36) umfasst:
- eine erste Datenschnittstelle (38) zum Verbinden der Komponente (42) über eine erste Datenverbindung (40),
- eine zweite Datenschnittstelle (44) zum Verbinden des entfernten Computers (14) über eine zweite Datenverbindung (46),
- eine dritte Datenschnittstelle (54) zum Empfangen eines Schaltsignals (56) über eine dritte Datenverbindung (58),
- eine trennbare interne Datenverbindung (49) zwischen der ersten Datenschnittstelle (38) und der zweiten Datenschnittstelle (44) und
- eine Schalteinheit (52), die eingerichtet ist, in Abhängigkeit des Schaltsignals (56) eine physikalische Verbindung der internen Datenverbindung (49) zu trennen und/oder herzustellen.

2. Sicherheitsvorrichtung nach Anspruch 1, wobei die Sicherheitsvorrichtung (36) eine Kopplungseinheit (48), insbesondere einen Switch, einen Repeater, einen Router oder ein Modem, umfasst, die die erste Datenschnittstelle (38) und die zweite Datenschnittstelle (44) umfasst, die Kopplungseinheit (48) eine Spannungsversorgung (50) zum Bereitstellen der internen Datenverbindung aufweist und die Spannungsversorgung (50) mit der Schalteinheit (52) an- und/oder abschaltbar ist, um die physikalische Verbindung der internen Datenverbindung (49) zu trennen und/oder herzustellen.

3. Sicherheitsvorrichtung nach Anspruch 1 oder 2, wobei die Sicherheitsvorrichtung (36) eingerichtet ist, die physikalische Verbindung der internen Datenverbindung (49) nach einer vorbestimmten Dauer, zum Beispiel nach einer Dauer im Bereich von 30 Sekunden bis 12 Stunden, besonders bevorzugt im Bereich von einer Minute bis zu einer Stunde, zum Beispiel 30 Minuten, oder Inaktivität der Datenübertragung für einen vordefinierten Zeitraum automatisch zu trennen.

4. System mit einer Sicherheitsvorrichtung (36) nach einem der Ansprüche 1 bis 3, ferner umfassend einen Zugangsrechner (60), der eingerichtet ist, über eine vierte Datenverbindung (62) mit dem entfernten Computer (14) Daten auszutauschen, um in Abhängigkeit der ausgetauschten Daten das Schaltsignal (56) zu erzeugen.

5. System nach Anspruch 4, wobei der Zugangsrechner (60) eingerichtet ist, das Schaltsignal (56) direkt zu erzeugen und über die dritte Datenverbindung (58) an die dritte Datenschnittelle (54) zu übertragen oder
der Zugangsrechner (60) mit der Komponente (42) über eine fünfte Datenverbindung (61) verbindbar und eingerichtet ist, das Schaltsignal (56) indirekt zu erzeugen, durch Veranlassen der Komponente (42) über die fünfte Datenverbindung (61), das Schaltsignal (56) zu erzeugen und über die dritte Datenverbindung (58) an die dritte Datenschnittstelle (54) zu übertragen.

6. System nach Anspruch 5, wobei die trennbare Datenverbindung (49) eine Datenübertragungsrate aufweist, die mehr als einem Mehrfachen der Datenübertragungsrate der dritten Datenverbindung (58) und/oder der fünften Datenverbindung entspricht.

7. System nach Anspruch 5 oder 6, wobei die dritte Datenverbindung (58) und/oder fünfte Datenverbindung (61) eine serielle Datenverbindung und/oder eine Busverbindung, insbesondere eine Feldbusverbindung, besonders bevorzugt mit einem proprietären Protokoll, ist.

8. System nach einem der Ansprüche 4 bis 7, wobei die erste Datenverbindung (40), die zweite Datenverbindung (46) und/oder die vierte Datenverbindung (62) eine Ethernetverbindung ist.

9. System nach einem der Ansprüche 4 bis 8, wobei das System (30) einen Zugangspunkt (34), insbesondere einen Router oder VPN-Router, aufweist, um die Datenverbindung mit dem entfernten Computer (14) über die zweite Datenverbindung (46) und/oder vierte Datenverbindung (62) zumindest abschnittsweise über eine Internetverbindung oder eine Netzwerkverbindung zu führen.

10. System nach einem der Ansprüche 4 bis 9, wobei eine, mehrere oder alle Datenverbindungen (40, 46, 49, 58, 61, 62) eingerichtet sind, verschlüsselte Daten zu übertragen.

11. System nach einem der Ansprüche 4 bis 10, wobei die Komponente (42) eine Komponente oder ein Bestandteil eines Windparkreglers (10) oder einer Windenergieanlage (100) ist und/oder
das System mehrere Windenergieanlagen (100) und/oder einen Windparkregler (10) umfasst.

12. System nach einem der Ansprüche 4 bis 11, wobei die Komponente (42) eingerichtet ist, vorbestimmte Zugriffe zu erkennen und die physikalische Verbindung in Abhängigkeit der erkannten Zugriffe zu trennen.

13. Verfahren zum Datenaustausch mit einer Komponente (42) einer Windenergieanlage (100) und/oder eines Windparks (112), wobei der Datenaustausch mit einer Sicherheitsvorrichtung (36) nach einem der Ansprüche 1 bis 3 und/oder einem System (30) nach einem der Ansprüche 4 bis 12 ausgeführt wird.

14. Verfahren nach Anspruch 13, wobei ein Schaltsignal (56) erzeugt wird, um mit der Sicherheitsvorrichtung (36) eine physikalische Verbindung einer trennbaren internen Datenverbindung (49) zwischen einer ersten Datenschnittstelle (38), mit der die Komponente (42) über eine erste Datenverbindung (40) verbunden ist, und einer zweiten Datenschnittstelle (44), mit der ein entfernter Computer (14) über eine zweite Datenverbindung (46) verbunden ist, herzustellen und/oder zu trennen.

15. Verfahren nach Anspruch 13 oder 14, wobei die physikalische Verbindung der internen Datenverbindung (49) nach einer vorbestimmten Dauer, zum Beispiel nach einer Dauer im Bereich von 30 Sekunden bis 12 Stunden, besonders bevorzugt im Bereich von einer Minute bis zu einer Stunde, zum Beispiel 30 Minuten, oder Inaktivität der Datenübertragung für einen vordefinierten Zeitraum automatisch getrennt wird.

## Claims

1. A security apparatus for data exchange of a component (42) of a wind turbine (100) or a wind farm (112), in particular a wind farm controller (10) with a remote computer (14), wherein the security apparatus (36) includes:
- a first data interface (38) for connecting the component (42) by way of a first data connection (40),
- a second data interface (44) for connecting the remote computer (14) by way of a second data connection (46),
- a third data interface (54) for receiving a switching signal (56) by way of a third data connection (58),
- a separable internal data connection (49) between the first data interface (38) and the second data interface (44), and
- a switching unit (52) which is adapted in dependence on the switching signal (56) to separate and/or make a physical connection of the internal data connection (49).

2. A security apparatus according to claim 1 wherein the security apparatus (36) includes a coupling unit (48), in particular a switch, a repeater, a router or a modem, which includes the first data interface (38) and the second data interface (44), the coupling unit (48) has a voltage supply (50) for providing the internal data connection and the voltage supply (50) can be switched on and/or off by the switching unit (42) in order to separate and/or make the physical connection of the internal data connection (49).

3. A security apparatus according to claim 1 or claim 2 wherein the security apparatus (36) is adapted to automatically separate the physical connection of the internal data connection (49) after a predetermined period of time, for example after a duration in the range of 30 seconds to 12 hours, particularly preferably in the range of one minute to one hour, for example 30 minutes, or inactivity of data transmission for a predetermined period of time.

4. A system comprising a security apparatus (36) according to one of claims 1 to 3 and further including an access computer (60) which is adapted to exchange data with the remote computer (14) by way of a fourth data connection (62) in order to produce the switching signal (56) in dependence on the exchanged data.

5. A system according to claim 4 wherein the access computer (60) is adapted to produce the switching signal (56) directly and transmit it by way of the third data connection (58) to the third data interface (54), or
the access computer (60) can be connected to the component (42) by way of a fifth data connection (61) and is adapted to produce the switching signal (56) indirectly, by causing the component (42) to produce the switching signal (56) by way of the fifth data connection (61) and transmit it by way of the third data connection (58) to the third data interface (54).

6. A system according to claim 5 wherein the separable data connection (49) has a data transfer rate which is more than a multiple of the data transfer rate of the third data connection (58) and/or the fifth data connection.

7. A system according to claim 5 or claim 6 wherein the third data connection (58) and/or the fifth data connection (61) is a serial data connection and/or a bus connection, in particular a field bus connection, particularly preferably with a proprietary protocol.

8. A system according to one of claims 4 to 7 wherein the first data connection (40), the second data connection (46) and/or the fourth data connection (62) is an ethernet connection.

9. A system according to one of claims 4 to 8 wherein the system (30) has an access point (34), in particular a router or VPN router, in order to guide the data connection to a remote computer (14) by way of the second data connection (46) and/or the fourth data connection (62) at least portion-wise by way of an internet connection or a network connection.

10. A system according to one of claims 4 to 9 wherein one, a plurality of or all data connections (40, 46, 49, 58, 61, 62) are adapted to transmit encrypted data.

11. A system according to one of claims 4 to 10 wherein the component (42) is a component or constituent part of a wind farm controller (10) or a wind turbine (100) and/or
the system includes a plurality of wind turbines (100) and/or a wind farm controller (10).

12. A system according to one of claims 4 to 11 wherein the component (42) is adapted to recognise predetermined accesses and to separate the physical connection in dependence on the recognised accesses.

13. A method of data exchange with a component (42) of a wind turbine (100) and/or wind farm (112), wherein the data exchange is carried out with a security apparatus (36) according to one of claims 1 to 3 and/or a system (30) according to one of claims 4 to 12.

14. A method according to claim 13 wherein a switching signal (56) is produced in order with the security apparatus (36) to make and/or separate a physical connection of a separable internal data connection (49) between a first data interface (38) to which the component (42) is connected by way of a first data connection (40) and a second data interface (44) to which a remote computer (14) is connected by way of a second data connection (46).

15. A method according to claim 13 or claim 14 wherein the physical connection of the internal data connection (49) is separated automatically after a predetermined period of time, for example after a duration in the range of 30 seconds to 12 hours, particularly preferably in the range of one minute to one hour, for example 30 minutes, or inactivity of data transmission for a predefined period of time.

## Revendications

1. Dispositif de sécurité pour l'échange de données d'un composant (42) d'une éolienne (100) ou d'un parc éolien (112), en particulier d'un régulateur de parc éolien (10), avec un ordinateur distant (14), dans lequel le dispositif de sécurité (36) comprend :
- une première interface de données (38) pour la liaison du composant (42) par l'intermédiaire d'une première liaison de données (40),
- une deuxième interface de données (44) pour la liaison de l'ordinateur distant (14) par l'intermédiaire d'une deuxième liaison de données (46),
- une troisième interface de données (54) pour la réception d'un signal de commutation (56) par l'intermédiaire d'une troisième liaison de données (58),
- une liaison de données interne (49) pouvant être rompue entre la première interface de données (38) et la deuxième interface de données (44) et
- une unité de commutation (52), qui est conçue pour rompre et/ou établir une liaison physique de la liaison de données interne (49) en fonction du signal de commutation (56).

2. Dispositif de sécurité selon la revendication 1, dans lequel le dispositif de sécurité (36) comprend une unité de couplage (48), en particulier un commutateur réseau, un répéteur, un routeur ou un modem, qui comprend la première interface de données (38) et la deuxième interface de données (44), l'unité de couplage (48) présente une alimentation en tension (50) pour la fourniture de la liaison de données interne et l'alimentation en tension (50) peut être allumée et/ou éteinte avec l'unité de commutation (52), afin de rompre et/ou d'établir la liaison physique de la liaison de données interne (49).

3. Dispositif de sécurité selon la revendication 1 ou 2, dans lequel le dispositif de sécurité (36) est conçu pour rompre automatiquement la liaison physique de la liaison de données interne (49) après une durée prédéfinie, par exemple après une durée dans la plage de 30 secondes à 12 heures, de manière particulièrement préférée dans la plage d'une minute à une heure, par exemple de 30 minutes, ou inactivité de la transmission de données pour un laps de temps prédéfini.

4. Système avec un dispositif de sécurité (36) selon l'une quelconque des revendications 1 à 3, comprenant en outre un calculateur d'accès (60), qui est conçu pour échanger des données avec l'ordinateur distant (14) par l'intermédiaire d'une quatrième liaison de données (62), afin de générer le signal de commutation (56) en fonction des données échangées.

5. Système selon la revendication 4, dans lequel le calculateur d'accès (60) est conçu pour générer directement le signal de commutation (56) et pour le transmettre à la troisième interface de données (54) par l'intermédiaire de la troisième liaison de données (58) ou
le calculateur d'accès (60) peut être relié au composant (42) par l'intermédiaire d'une cinquième liaison de données (61) et est conçu pour produire indirectement le signal de commutation (56), en incitant le composant (42) à produire le signal de commutation (56) par l'intermédiaire de la cinquième liaison de données (61) et à le transmettre à la troisième interface de données (54) par l'intermédiaire de la troisième liaison de données (58).

6. Système selon la revendication 5, dans lequel la liaison de données (49) pouvant être rompue présente un taux de transmission de données qui est supérieur à un multiple du taux de transmission de données de la troisième liaison de données (58) et/ou de la cinquième liaison de données.

7. Système selon la revendication 5 ou 6, dans lequel la troisième liaison de données (58) et/ou cinquième liaison de données (61) est une liaison de données en série et/ou une liaison de bus, en particulier une liaison de bus de terrain, de manière particulièrement préférée avec un protocole propriétaire.

8. Système selon l'une quelconque des revendications 4 à 7, dans lequel la première liaison de données (40), la deuxième liaison de données (46) et/ou la quatrième liaison de données (62) est une liaison Ethernet.

9. Système selon l'une quelconque des revendications 4 à 8, dans lequel le système (30) présente un point d'accès (34), en particulier un routeur ou routeur VPN, afin de guider la liaison de données avec l'ordinateur distant (14) par l'intermédiaire de la deuxième liaison de données (46) et/ou quatrième liaison de données (62) au moins sur certaines parties par l'intermédiaire d'une liaison Internet ou d'une liaison réseau.

10. Système selon l'une quelconque des revendications 4 à 9, dans lequel une, plusieurs ou toutes les liaisons de données (40, 46, 49, 58, 61, 62) sont conçues pour transmettre des données chiffrées.

11. Système selon l'une quelconque des revendications 4 à 10, dans lequel le composant (42) est un composant ou un élément constitutif d'un régulateur de parc éolien (10) ou d'une éolienne (100) et/ou
le système comprend plusieurs éoliennes (100) et/ou un régulateur de parc éolien (10).

12. Système selon l'une quelconque des revendications 4 à 11, dans lequel le composant (42) est conçu pour détecter des accès prédéfinis et pour rompre la liaison physique en fonction des accès détectés.

13. Procédé pour l'échange de données avec un composant (42) d'une éolienne (100) et/ou d'un parc éolien (112), dans lequel l'échange de données est exécuté avec un dispositif de sécurité (36) selon l'une quelconque des revendications 1 à 3 et/ou un système (30) selon l'une quelconque des revendications 4 à 12.

14. Procédé selon la revendication 13, dans lequel un signal de commutation (56) est généré, afin d'établir et/ou de rompre avec le dispositif de sécurité (36) une liaison physique d'une liaison de données interne (49) pouvant être rompue entre une première interface de données (38), avec laquelle le composant (42) est relié par l'intermédiaire d'une première liaison de données (40), et une deuxième interface de données (44), avec laquelle un ordinateur distant (14) est relié par l'intermédiaire d'une deuxième liaison de données (46).

15. Procédé selon la revendication 13 ou 14, dans lequel la liaison physique de la liaison de données interne (49) est rompue automatiquement après une durée prédéfinie, par exemple après une durée dans la plage de 30 secondes à 12 heures, de manière particulièrement préférée dans la plage d'une minute à une heure, par exemple de 30 minutes, ou d'inactivité de la transmission de données pendant un laps de temps prédéfini.
